(19)

**Europäisches Patentamt**
**European Patent Office**
**Office européen des brevets**

(11) **EP 3 920 072 A1**

(12) **EUROPEAN PATENT APPLICATION**

(43) Date of publication:
**08.12.2021 Bulletin 2021/49**

(21) Application number: **20178087.1**

(22) Date of filing: **03.06.2020**

(51) Int Cl.:
**G06F 30/28** *(2020.01)* **G06F 30/23** *(2020.01)*
**G06F 30/15** *(2020.01)* *G06F 111/10* *(2020.01)*
**G06F 113/08** *(2020.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ingrid Cloud AB**
**115 60 Stockholm (SE)**

(72) Inventors:
• **DESAND, Sebastian**
**115 60 Stockholm (SE)**

• **HOFFMAN, Johan**
**131 52 Nacka (SE)**
• **JANSSON, Niclas**
**115 46 Stockholm (SE)**
• **VILELA DE ABREU, Rodrigo**
**117 26 Stockholm (SE)**

(74) Representative: **Brann AB**
**P.O. Box 3690**
**Drottninggatan 27**
**103 59 Stockholm (SE)**

(54) **SYSTEM FOR PROVIDING A SIMULATION MODEL, SYSTEM FOR ILLUSTRATING ESTIMATED FLUID MOVEMENTS AROUND A STRUCTURE, METHODS THEREFORE AND A COMPUTER PROGRAM PRODUCT**

(57)     An interface node (430) obtains structural data ($D_S$) describing a geometric outline of a structure (S) in the form of a three-dimensional digital model, and digital fluid data ($D_F$) describing an incoming fluid flow (F) in three dimensions, which incoming fluid flow (F) will cause estimated fluid movements (FF) around a structure (S). Based on the structural data ($D_S$) and the digital fluid data ($D_F$), a modelling node (200) provides a simulation model (SM) for simulating a fluid flow around a structure (S) using adaptive mesh refinement techniques. A set of networked computing resources (310) derives fluid movements (FF) around the structure (S) using computational fluid dynamics operations to estimate a result ($r_1$, $r_i$, $r_n$) of the incoming fluid flow (F). A graphics processing node (320) post processes the derived fluid movements (FF) to generate presentation data ($D_P$) for illustrating these movements on a display (330).

Fig. 4

EP 3 920 072 A1

**Description**

TECHNICAL FIELD

The invention relates generally to high-fidelity computational fluid dynamics (CFD). In particular, the invention pertains to a modelling node for providing a simulation model to simulate fluid movements around a structure and a corresponding processor-implemented method, a system for illustrating estimated fluid movements around a structure modelled by the proposed simulation model and a corresponding processor-implemented method. The invention also relates to a computer program product and a non-volatile data carrier.

BACKGROUND

In computer-aided engineering (CAE) computer software is used to aid engineering analysis tasks. CFD is a subarea of CAE in which the engineering tasks concern fluid dynamics.

Cloud-based CFD services exist today. Here, the computations underlying the CFD simulations and data analysis are carried out at remote data centers, which are accessed over the internet. To set up a CFD simulation a user must provide a description of the geometry of the design/construction to be analyzed, i.e. the "CFD simulation model." For example, the CFD simulation model may relate to the wind flowing past a car or a building. To enable the CFD simulation, the user needs to provide input parameters defining the CFD model and the numerical method to be used.

In practice, this means that the user needs to devote a substantial amount of manual time to design a so-called CFD mesh, which is a computer representation of the CFD simulation model in the form of a set of data points typically connected to one another by edges in a mesh. In each data point of the mesh the simulation generates CFD data, which can be visualized and analyzed by the user. In general, it is expected that a larger number of mesh points leads to a higher accuracy in the CFD simulation. However, the model and method parameters used also contribute significantly to the accuracy, or fidelity, in the CFD simulation. It should further be noted that each additional mesh point increases the computational cost in terms of computer memory and processing time. Together, the processing time and the manual time needed to set up the simulation amount to a total "time to solution." The processing time is determined by the CFD model, the numerical method, the CFD mesh, the software implementation and the hardware platform. The manual time depends on the number of parameters that the user needs to specify, and the nature of these parameters; in other words, the level of expertise required by the user. A long overall time provides a poor user experience of the simulation service. It is therefore important to keep the manual time, the processing time as well as the time required to analyze the CFD data as short as possible.

Below follow some examples of known solutions for fluid simulation.

US 8,577,648 describes a method of simulating fluid flow in a three-dimensional volume with a moving boundary. The moving boundary is provided within a CFD mesh. The CFD mesh includes mesh points defining three-dimensional mesh cells. Locations of the mesh points at the moving boundary are revised predicated on known motion characteristics thereof such that the CFD mesh undergoes distortion near the moving boundary. The distortion is minimized using an elastic deformation model that does not involve dimensional physical parameters. As a result, a revised CFD mesh is generated. A fluid flow simulation is then computed for the three-dimensional volume using the revised CFD mesh.

US 2010/0145668 discloses a method for dynamic repartitioning of a mesh, wherein the mesh is partitioned to find a solution using a plurality of processors, and wherein the partitions have become unbalanced. The method allows large portions of the mesh to continue to progress towards a solution by only repartitioning a small percentage of the overall mesh. This is done by stripping cells along the partition interfaces using a marching method to form a free-cell region, repartitioning the free-cell region, and joining the repartitioned portions of the free-cell region with the remaining cells in a manner that will increase the efficiency of the solver.

US 6,512,999 reveals an apparatus for and a method of simulating physical processes such as fluid flow. Fluid flow near a boundary or wall of an object is represented by a collection of vortex sheet layers. The layers are composed of a grid or mesh of one or more geometrically shaped space filling elements. In the preferred embodiment, the space filling elements take on a triangular shape. An Eulerian approach is employed for the vortex sheets, where a finite-volume scheme is used on the prismatic grid formed by the vortex sheet layers. A Lagrangian approach is employed for the vortical elements (e.g. vortex tubes or filaments) found in the remainder of the flow domain. To reduce the computational time, a hairpin removal scheme is employed to reduce the number of vortex filaments, and a Fast Multipole Method (FMM), preferably implemented using parallel processing techniques, reduces the computation of the velocity field.

Although the above solutions may be efficient, inter alia with respect to accuracy, none of them presents a user friendly procedure. Namely, in today's fluid simulation solutions, the user must always specify relatively many parameters for the CFD model and the numerical method. The user also needs design a computational mesh to enable the simulation. Thus, it is demanded that the user has a high level of CFD expertise. Furthermore, the user must invest a significant amount of time. In addition, it typically takes substantial time for a computer to solve the simulation problem, especially for higher degrees of accuracy.

SUMMARY

It is therefore an object of the present invention to offer a fluid flow simulation solution, which is capable of providing accurate simulations in a convenient and straightforward manner to users having a wide range of expertise levels.

According to one aspect of the invention, this object is achieved by a method performed in at least one processing circuit for providing a simulation model, which, in turn is configured to simulate fluid movements around a structure. The method involves obtaining structural data in the form of a three-dimensional digital model describing a geometric outline of the structure. The method further involves obtaining fluid data in the form of a digital description of a three-dimensional fluid flow, which is to be applied on the structure in the simulation model. Based on the fluid data, a fluid tunnel is generated. The fluid tunnel constitutes a volume in which the fluid movements around the structure is to be simulated. The volume is outwardly delimited by a tunnel boundary. The method involves generating a surface mesh based on the structural data. The surface mesh represents a connected surface enclosing the structure. The method also involves generating a volume mesh of geometrically shaped space filling elements around the surface mesh. The mesh of geometrically shaped space filling elements extends between the surface mesh and the tunnel boundary. The mesh of geometrically shaped space filling elements has an initial level of granularity. Then, a granularity of the mesh of geometrically shaped space filling elements is increased, repeatedly, from the initial level of granularity to levels of higher granularity. The granularity is increased in response to a posteriori estimation of errors in a fluid load prediction via a refinement algorithm that is configured to adaptively construct local error indicators of which of the geometrically shaped space filling elements to refine to enhance a quality metric of the volume mesh. The granularity of the mesh is increased until a stopping criterion is fulfilled; and thus, a resulting mesh of geometrically shaped space filling elements is obtained.

Preferably, the stopping criterion is considered to be fulfilled if the quality metric exceeds a threshold value.

This method of providing a simulation model is advantageous because it does not require any tuning of the parameters for the CFD model. The user does not need to tune the numerical methods either. Moreover, the CFD mesh is automatically generated and optimized to minimize the computational cost and maximize the fidelity in the CFD simulation. In other words, the user only needs to provide a geometry model of the structure to enable production of high fidelity CFD simulations. This enables also non-experts to readily use the simulation service. As a result, CFD analysis can be made earlier in the design process, which renders this process more efficient and open to larger flexibility. Further, the reduced time to solution leads to faster development time and shorter time to market.

According to one embodiment of this aspect of the invention, the refinement algorithm is based on a system of adjoint equations holding sensitivity information that connects local discretization errors to an overall error in a quantity of interest being expressed in the fluid data. Further, the step of repeatedly increasing the granularity of the mesh of geometrically shaped space filling elements involves obtaining the sensitivity information by directly solving the adjoint equations in said system of adjoint equations. Consequently, high granularity can be focused to those areas where it is needed the most, while other areas maintain a relatively coarse granularity. This saves valuable computation resources.

According to another embodiment of this aspect of the invention, the fluid tunnel is shaped as a sphere, a hemisphere, a cylinder, a semi-cylinder, or a cuboid. Thereby, the user can simply select a suitable simulation environment from a library of prepared shapes.

According to another aspect of the invention, the object is achieved by a computer program product loadable into a non-volatile data carrier being communicatively connected to at least one processor. The computer program product contains software configured to, when the computer program product is run on the at least one processing circuit, cause the at least one processing circuit to provide a simulation model configured to simulate a fluid flow around a structure, by executing the steps of:

- obtaining structural data in the form of a three-dimensional digital model describing a geometric outline of the structure;
- obtaining fluid data in the form of a digital description of a fluid flow in three dimensions, which fluid flow is to be applied on the structure in the simulation model;
- generating a fluid tunnel based on the fluid data, the fluid tunnel constituting a volume in which the fluid movements around the structure is to be simulated, which volume is outwardly delimited by a tunnel boundary;
- generating a surface mesh based on the structural data, the surface mesh representing a connected surface enclosing the structure;
- generating a volume mesh of geometrically shaped space filling elements around the surface mesh, the mesh of geometrically shaped space filling elements extending between the surface mesh and the tunnel boundary, the mesh of geometrically shaped space filling elements having an initial level of granularity; and
- increasing, repeatedly, a granularity of the mesh of geometrically shaped space filling elements from the initial level of granularity to levels of higher granularity, the granularity being increased in response to a posteriori estimation of errors in a fluid load prediction via a refinement algorithm configured to adaptively construct local error indicators of which of said geometrically shaped space filling elements to refine to enhance a quality metric of the volume mesh, the granularity of the mesh being increased until a stopping criterion is fulfilled, and a resulting mesh of geometrically shaped space filling elements is obtained.

The advantages of this computer program product are apparent from the discussion above with reference to the proposed method for providing a simulation model.

According to yet another aspect of the invention, the above object is achieved by a modelling node comprising at least one processing unit for providing a simulation model configured to simulate a fluid flow around a structure. The modelling node is configured to execute the steps of:

- obtaining structural data in the form of a three-dimensional digital model describing a geometric outline of the structure;
- obtaining fluid data in the form of a digital description of a fluid flow in three dimensions, which fluid flow is to be applied on the structure in the simulation model;
- generating a fluid tunnel based on the fluid data, the fluid tunnel constituting a volume in which the fluid movements around the structure is to be simulated, which volume is outwardly delimited by a tunnel boundary;
- generating a surface mesh based on the structural data, the surface mesh representing a connected surface enclosing the structure;
- generating a volume mesh of geometrically shaped space filling elements around the surface mesh, the mesh of geometrically shaped space filling elements extending between the surface mesh and the tunnel boundary, the mesh of geometrically shaped space filling elements having an initial level of granularity; and
- increasing, repeatedly, a granularity of the mesh of geometrically shaped space filling elements from the initial level of granularity to levels of higher granularity, the granularity being increased in response to a posteriori estimation of errors in a fluid load prediction via a refinement algorithm configured to adaptively construct local error indicators of which of said geometrically shaped space filling elements to refine to enhance a quality metric of the volume mesh, the granularity of the mesh being increased until a stopping criterion is fulfilled, and a resulting mesh of geometrically shaped space filling elements is obtained.

The advantages of this modelling node are apparent from the discussion above with reference to the proposed method for providing a simulation model.

According to still another aspect of the invention, the above object is achieved by a computer-implemented solver method for illustrating estimated fluid movements around a structure that is modelled by the above-proposed simulation model. The computer-implemented solver method involves the steps of:

- obtaining digital fluid data describing an incoming fluid flow in three dimensions;
- deriving fluid movements around the structure using computational fluid dynamics operations on at least one high-performance computing resource to estimate a result of the incoming fluid flow being applied to the surface mesh and the volume mesh resulting from the simulation model, the fluid movements being represented by evolving at least one fluid quantity over a set of time steps during an interval; and
  post processing the derived fluid movements to generate presentation data configured to be presented on a display, which presentation data represent at least one graphic illustration of the fluid movements in at least one time step in said set of time steps, for instance by an image, a video sequence and/or at least one quantity of interest describing at least one fluid quantity.

Hence, combining this solver method with the above-proposed method of for providing a simulation model, provides a fully automated workflow from geometry model to CFD analysis report. Naturally, the manual time can thereby be reduced to a minimum. The processing time is also minimized by efficient algorithms and software implementations that leverage high performance computing (HPC) resources that are available at supercomputing centers around the world.

Specifically, according to another aspect of the invention, the above object is achieved by a system for illustrating estimated fluid movements around a structure. The system contains an interface node, a modelling node, a set of networked computing resources and a graphics processing node. The interface node is configured to obtain: structural data describing a geometric outline of the structure in the form of a three-dimensional digital model, and digital fluid data describing an incoming fluid flow in three dimensions, which incoming fluid flow will cause the estimated fluid movements around a structure. The modelling node is arranged to provide a simulation model based on the structural data and the digital fluid data, the simulation model being configured to simulate a fluid flow around a structure. The set of networked computing resources includes a number of high-performance computing resources configured to derive fluid movements around the structure using computational fluid dynamics operations to estimate a result of the incoming fluid flow being applied to the surface mesh and the volume mesh resulting from the simulation model, the fluid movements being represented by evolving at least one fluid quantity over a set of time steps during an interval. The graphics processing node is configured to post process the derived fluid movements to generate presentation data configured to be presented on a display, which presentation data represent at least one graphic illustration of the fluid movements in at least one time step in said set of time steps.

The advantages of this system are apparent from the discussion above with reference to the proposed method for providing a simulation model and solver method.

Further advantages, beneficial features and applications of the present invention will be apparent from the following description and the dependent claims.

BRIEF DESCRIPTION OF THE DRAWINGS

The invention is now to be explained more closely by means of preferred embodiments, which are disclosed as examples, and with reference to the attached drawings.

Figure 1      illustrates a simulation tunnel in which fluid movements around a structure are estimated according to one embodiment of the invention;

Figures 2 and 5      show block diagrams over a modelling node according to embodiments of the invention;

Figure 3      illustrates, via a block diagram, how a simulation is carried out and presented to a user according to one embodiment of the invention;

Figure 4      shows block a diagram over a system according to one embodiment of the invention;

Figure 6      shows a generic block diagram over a computing resource used for executing a simulation according to one embodiment of the invention;

Figure 7      illustrates, by means of a flow diagram, the general method according to the invention for generating a simulation model; and

Figure 8      illustrates, by means of a flow diagram, the general method according to the invention for simulating an estimated fluid flow around a structure and illustrating the same to a user.

DETAILED DESCRIPTION

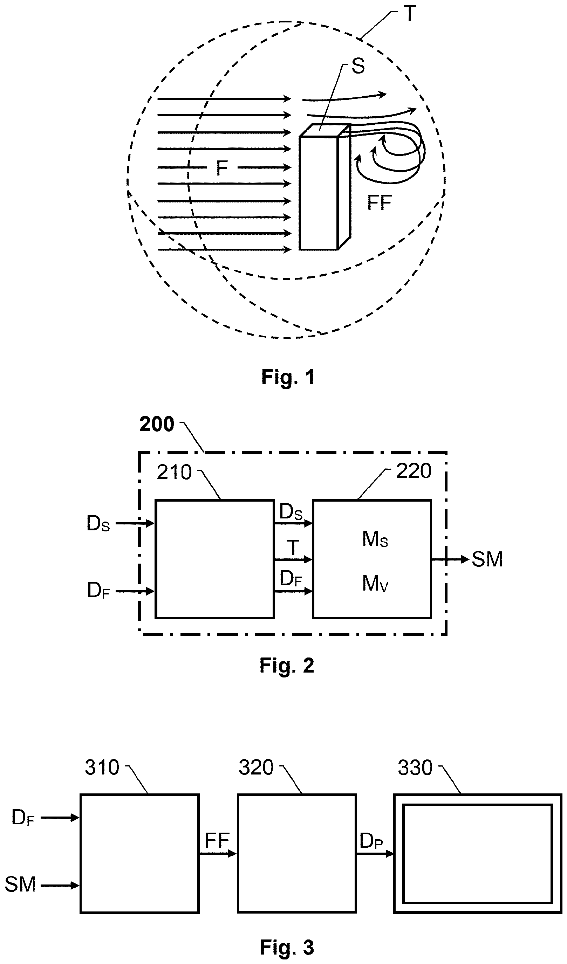

In Figure 1, we see a fluid tunnel T, in the form of a sphere, in which fluid movements FF around a structure S are estimated according to one embodiment of the invention. Figure 2 shows a block diagram over a modelling node 200 according to one embodiment of the invention. The modelling node 200 is configured to provide a simulation model SM needed to simulate fluid the movements FF around the structure S.

The modelling node 200 may include first and second processing units 210 and 220 respectively for providing the simulation model SM. For example, the first processing unit 210 may be configured to generate the fluid tunnel T based on structural data Ds and fluid data $D_F$ as follows.

The first processing unit 210 obtains the structural data Ds in the form of a three-dimensional digital model describing a geometric outline of the structure S. The first processing unit 210 also obtains the fluid data $D_F$ in the form of a digital description of a fluid flow F in three dimensions, which fluid flow F is to be applied on the structure S in the simulation model SM so as to cause the fluid movements FF. The first processing unit 210 generates a fluid tunnel T based on the fluid data. The fluid tunnel T constitutes a volume in which the fluid movements FF around the structure S will be simulated. The volume has a predefined geometric shape and is outwardly delimited by a tunnel boundary. For example, the fluid tunnel T may represent a sphere (as shown in Figure 1), a hemisphere, a cylinder, a semi-cylinder or a cuboid.

The second processing unit 220 obtains the structural data Ds, the fluid data $D_F$ and a digital description of the fluid tunnel T. Based on the structural data Ds, the second processing unit 220 generates a surface mesh Ms representing a connected surface that encloses the structure S.

The second processing unit 220 also generates a volume mesh Mv of geometrically shaped space filling elements around the surface mesh Ms. The mesh of geometrically shaped space filling elements extends between the surface mesh Ms and the tunnel boundary. To start off, the mesh of geometrically shaped space filling elements has an initial level of granularity, which is relatively coarse and preferably evenly distributed in the space between the structure S and boundary of the tunnel T. Then, the second processing unit 220 repeatedly increases the granularity of the mesh of geometrically shaped space filling elements from the initial level of granularity to levels of higher granularity. Here, the granularity is increased in response to a posteriori estimation of errors in a fluid load prediction via a refinement algorithm that is configured to adaptively construct local error indicators of which of the geometrically shaped space filling elements to refine in order to enhance a quality metric of the volume mesh Mv.

The refinement algorithm is preferably configured to operate in a recursive manner using a primal solver, a dual solver, an error estimator, and a mesh refinement module. Here, a result from the primal solver is input to the dual solver, a result from the dual solver is input to the error estimator, a result from the error estimator is input to the mesh refinement module, a result from the mesh refinement module is input to the primal solver, and so on.

According to one embodiment of the invention, the refinement algorithm is based on a system of adjoint equations holding sensitivity information that connects local discretization errors to an overall error in a quantity of interest being expressed in the fluid data. The step of repeatedly increasing the granularity of the volume mesh Mv of geometrically shaped space filling elements may thus involve obtaining the sensitivity information by directly solving the adjoint equations in said system of adjoint equations.

The posteriori error estimate may be expressed:

$$|M(u) - M(U)| \leq \sum_K E_K$$

for K cells.

Here, $E_K \sim h_K R_K(U) S_K$ is an error indicator, where $R_K(U)$ is the residual, $h_K$ is the mesh size, and an output sensitivity is reflected by a stability weight $S_K$.

The adjoint problem may be formulated:

$$-\frac{\partial \phi}{\partial t} - (u \cdot \nabla)\phi + \nabla U^T \phi + \nabla \theta = M(\cdot), \quad \nabla \cdot \phi = 0$$

The granularity of the volume mesh Mv is increased repeatedly until a stopping criterion is fulfilled, and a resulting volume mesh Mv of geometrically shaped space filling elements is obtained. For example, the stopping criterion can be considered to be fulfilled if the quality metric exceeds a threshold value.

As will be discussed below, the modelling node 200 need not be implemented by a design including two separate processing units as exemplified by 210 and 220. In fact, any other configuration of fewer or more processing circuits is conceivable according to the invention.

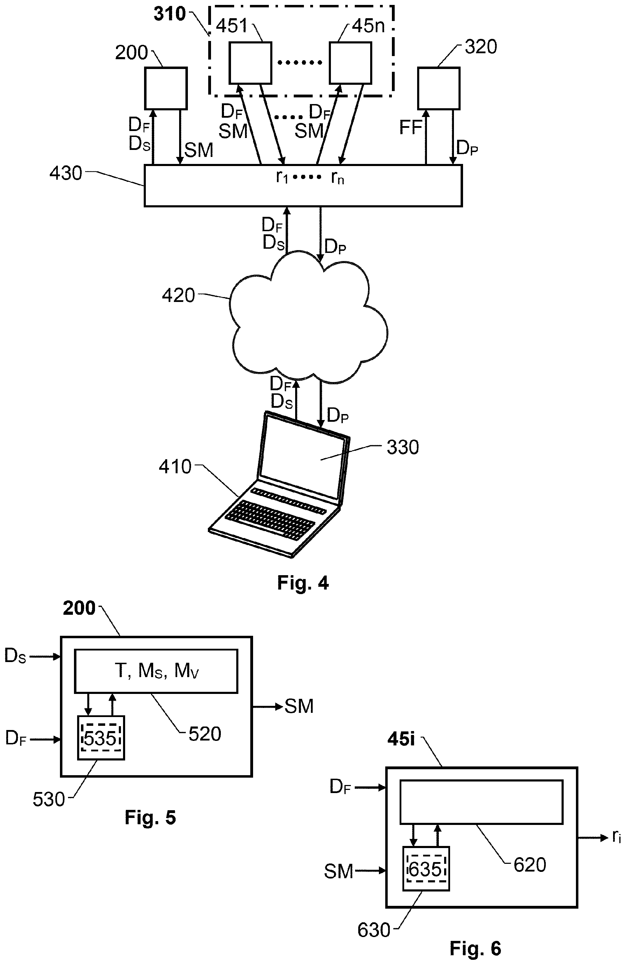

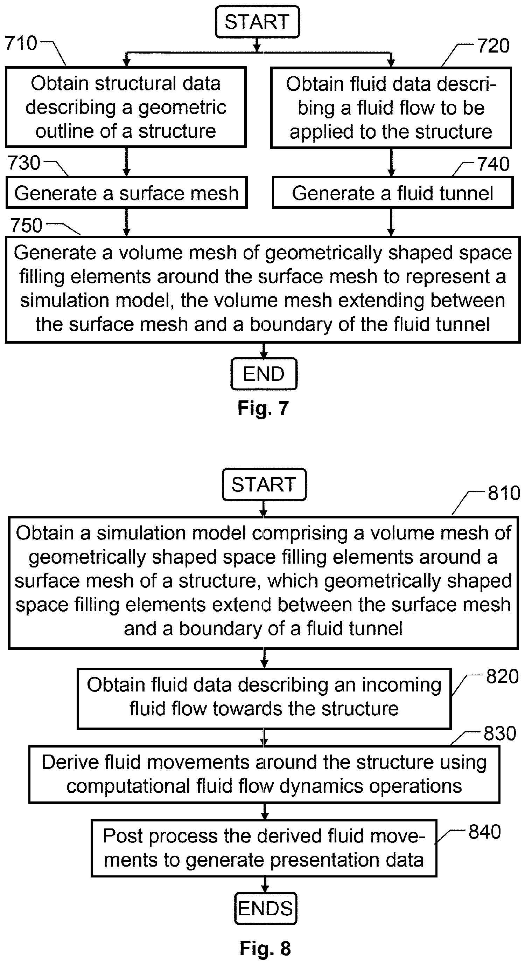

Referring now to Figure 5, we see an alternative implementation of the modelling node 200, where the simulation model SM is provided by means of a computer program product 535 containing software that is configured to, when the computer program product 535 runs on at least one processing circuit 520 in the modelling node 200. Specifically, the computer program product 535 is loaded into a non-volatile data carrier 530, e.g. a digital memory, which is communicatively connected to the at least one processing circuit 520. When the computer program product 535 is run on the at least one processing circuit 520, the software of the computer program product 535 is configured to cause the at least one processing circuit 520 to provide a simulation model configured to simulate a fluid flow around a structure, by executing the below steps as illustrated in the flow diagram of Figure 7.

In a first step 710, structural data Ds are obtained in the form of a three-dimensional digital model describing a geometric outline of the structure S.

In a step 720, for example parallel to step 710, fluid data $D_F$ are obtained in the form of a digital description of a fluid flow F in three dimensions, which fluid flow F is to be applied on the structure S in the simulation model SM.

In a step 730 following step 710, a fluid tunnel T is generated based on the fluid data $D_F$. The fluid tunnel T constitutes a volume in which the fluid movements FF around the structure S is to be simulated. The volume of the fluid tunnel T is outwardly delimited by a tunnel boundary.

In a step 740 following step 720, a surface mesh Ms is generated based on the structural data Ds. The surface mesh Ms represents a connected surface that encloses the structure S.

After steps 730 and 740, a step 750 generates a volume mesh Mv of geometrically shaped space filling elements around the surface mesh Ms. The mesh of geometrically shaped space filling elements extends between the surface mesh Ms and the boundary of the tunnel T. After step 750, the procedure ends.

Figure 3 illustrates how a simulation is carried out and presented to a user according to one embodiment of the invention.

Here, a first block 310 symbolizes a set of networked high-performance computing (HPC) resources, which is configured to derive fluid movements FF around the structure S. The HPC resources use computational fluid dynamics operations to estimate a result of the incoming fluid flow F, which is applied to the simulation model SM.

The fluid movements FF computed in the first block 310 are represented by evolving at least one fluid quantity, e.g. expressing velocity data and/or pressure data, over a set of time steps during an interval, say 10 seconds.

A second block 320 represents a graphics processing node 320, which is configured to post process the derived fluid movements FF to generate presentation data $D_P$, which, in turn, are configured to be presented on a display, e.g. a computer screen or similar device, here represented by a third block 330. The presentation data Dp represent at least one graphic illustration of the fluid movements FF in at least one time step in the set of time steps. According to embodiments of the invention, the graphic illustrations contain one or more images, a video sequence and/or quantities of interest that describe at least one of the at least one fluid quantity, for example the velocity data and/or the pressure data mentioned above.

According to the invention, a computer-implemented solver method for illustrating estimated fluid movements FF around a structure S that is modelled by the simulation model SM contains the below steps as illustrated in the flow diagram of Figure 8.

A first step 810 obtains the simulation model SM, which, in turn, has been derived as described above.

In a subsequent step step 820, digital fluid data $D_F$ are obtained, which digital fluid data $D_F$ describe an incoming fluid flow F in three dimensions.

Then, a step 830 derives fluid movements FF around the structure S using computational fluid dynamics operations on at least one HPC resource to estimate a result of the incoming fluid flow F that is applied to the surface mesh Ms and the volume mesh Mv resulting from the simulation model SM.

Thereafter, a step 840 post processes the derived fluid movements FF to generate presentation data Dp configured to be presented on a display. The presentation data Dp represent at least one graphic illustration of the fluid movements FF in at least one time step in a set of time steps.

All of the process steps, as well as any sub-sequence of steps, described with reference to Figures 7 and 8 above may be controlled by means of at least one programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Figure 4 shows block diagram over a system according to one embodiment of the invention for illustrating estimated fluid movements around a structure. The system contains an interface node 430, a modelling node 200, a set of networked computing resources 310 and a graphics processing node 320, which may implement a so-called cloud service.

The interface node 430 is configured to obtain structural data Ds and digital fluid data $D_F$ from a client 410, here exemplified by a laptop computer. The client 410 connects to the interface node 430 via at least one network 420, such as the Internet. The structural data Ds describe a geometric outline of the structure S in the form of a three-dimensional digital model. The digital fluid data $D_F$ describe an incoming fluid flow F in three dimensions, which incoming fluid flow F will cause the estimated fluid movements FF around a structure S. The interface node 430 is further configured to forward the structural data Ds and the digital fluid data $D_F$ to the modelling node 200.

The modelling node 200 is arranged to provide a simulation model SM based on the structural data Ds and the digital fluid data $D_F$. The simulation model SM is configured to simulate a fluid flow around a structure S. The modelling node 200 is further configured to forward the simulation model SM to the set of networked computing resources 310, preferably via the interface node 430.

The set of networked computing resources 310 contains a number of HPC resources, here symbolized by 451, 45i,..., 45n that is configured to derive fluid movements FF around the structure S using computational fluid dynamics operations to estimate a result $r_1$, $r_i$,..., $r_n$ of the incoming fluid flow F that is applied to the simulation model SM. Each HPC resource 451, 45i,..., 45n is given a separate processing task of the overall computation, and in response thereto, produces a corresponding partial result $r_1$, $r_i$,..., and $r_n$ respectively, which is forwarded to graphics processing node 320, preferably via the interface node 430. The fluid movements FF expressed by the partial results $r_1$, $r_i$,..., and $r_n$ are represented by evolving at least one fluid quantity over a set of time steps during an interval, i.e. the duration of the simulation.

The graphics processing node 320 is configured to post process the derived fluid movements FF to generate presentation data Dp configured to be presented on a display 330, for example the screen of the client's laptop computer 410. To generate the presentation data $D_P$, the graphics processing node 320 may include one or more graphics processing units (GPUs) and/or one or more graphics accelerators. The presentation data Dp represent at least one graphic illustration of the fluid movements FF in at least one time step in the set of time steps. The presentation data Dp may thus contain one or more images, a video sequence and/or at least one quantity of interest describing the at least one fluid quantity the flow of which is fluid movements FF, such as a liquid and or a gas.

Figure 6 shows a generic block diagram over an HPC resource 45i according to one embodiment of the invention, which HPC resource 45i is used for executing one of the above-mentioned separate processing tasks of the overall computation of the simulation.

HPC resource 45i is configured to obtain the digital fluid data $D_F$ and the simulation model SM. The partial result $r_i$ is derived by means of a computer program product 635 containing software that is configured to, when the computer program product 635 runs on at least one processing circuit 620 of the HPC resource 45i. Specifically, the computer program product 635 is loaded into a non-volatile data carrier 630, e.g. a digital memory, which is communicatively connected to the at least one processing circuit 620. When the computer program product 635 is run on the at least one processing circuit 620, the software of the computer program product 635 is configured to cause the processing circuit 620 to generate the partial result $r_i$ of the fluid movements FF by executing the above-described steps illustrated in the flow diagram of Figure 8.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures but may be varied freely within the scope of the claims.

## Claims

1.  A method performed in at least one processing circuit (520) for providing a simulation model (SM) configured to simulate fluid movements (FF) around a structure (S), the method comprising the steps of:

    obtaining structural data (Ds) in the form of a three-dimensional digital model describing a geometric outline of the structure (S);
    obtaining fluid data ($D_F$) in the form of a digital description of a fluid flow (F) in three dimensions, which fluid flow (F) is to be applied on the structure (S) in the simulation model (SM);
    generating a fluid tunnel (T) based on the fluid data ($D_F$), the fluid tunnel (T) constituting a volume in which the fluid movements (FF) around the structure (S) is to be simulated, which volume is outwardly delimited by a tunnel boundary;
    generating a surface mesh (Ms) based on the structural data (Ds), the surface mesh (Ms) representing a connected surface enclosing the structure (S);
    generating a volume mesh (Mv) of geometrically shaped space filling elements around the surface mesh (Ms), the mesh of geometrically shaped space filling elements extending between the surface mesh (Ms) and the tunnel boundary, the mesh of geometrically shaped space filling elements having an initial level of granularity; and
    increasing, repeatedly, a granularity of the mesh of geometrically shaped space filling elements from the initial level of granularity to levels of higher granularity, the granularity being increased in response to a posteriori estimation of errors in a fluid load prediction via a refinement algorithm configured to adaptively construct local error indicators of which of said geometrically shaped space filling elements to refine to enhance a quality metric of the volume mesh (Mv), the granularity of the mesh being increased until a stopping criterion is fulfilled, and a resulting mesh of geometrically shaped space filling elements is obtained.

2.  The method according to claim 1, wherein the stopping criterion is considered to be fulfilled if the quality metric exceeds a threshold value.

3.  The method according to any one of the claims 1 or 2, wherein the refinement algorithm is based on a system of adjoint equations holding sensitivity information that connects local discretization errors to an overall error in a quantity of interest being expressed in the fluid data ($D_F$), and the step of repeatedly increasing the granularity of the mesh of geometrically shaped space filling elements comprises:
    obtaining the sensitivity information by directly solving the adjoint equations in said system of adjoint equations.

4.  The method according to any one of the preceding claims, wherein the fluid tunnel (T) represents one of: a sphere, a hemisphere, a cylinder, a semi-cylinder and a cuboid.

**5.** A computer program product (535) loadable into a non-volatile data carrier (530) communicatively connected to at least one processing circuit (520), the computer program product (535) comprising software configured to, when the computer program product (535) is run on the at least one processing circuit (520), cause the at least one processing circuit (520) to provide a simulation model configured to simulate a fluid flow around a structure, by executing the steps of:

obtaining structural data (Ds) in the form of a three-dimensional digital model describing a geometric outline of the structure (S);
obtaining fluid data ($D_F$) in the form of a digital description of a fluid flow (F) in three dimensions, which fluid flow (F) is to be applied on the structure (S) in the simulation model (SM);
generating a fluid tunnel (T) based on the fluid data ($D_F$), the fluid tunnel (T) constituting a volume in which the fluid movements (FF) around the structure (S) is to be simulated, which volume is outwardly delimited by a tunnel boundary;
generating a surface mesh (Ms) based on the structural data (Ds), the surface mesh (Ms) representing a connected surface enclosing the structure (S);
generating a volume mesh (Mv) of geometrically shaped space filling elements around the surface mesh (Ms), the mesh of geometrically shaped space filling elements extending between the surface mesh (Ms) and the tunnel boundary, the mesh of geometrically shaped space filling elements having an initial level of granularity; and
increasing, repeatedly, a granularity of the mesh of geometrically shaped space filling elements from the initial level of granularity to levels of higher granularity, the granularity being increased in response to a posteriori estimation of errors in a fluid load prediction via a refinement algorithm configured to adaptively construct local error indicators of which of said geometrically shaped space filling elements to refine to enhance a quality metric of the volume mesh (Mv), the granularity of the mesh being increased until a stopping criterion is fulfilled, and a resulting mesh of geometrically shaped space filling elements is obtained.

**6.** A non-volatile data carrier (530) containing the computer program product (535) of the claim 5.

**7.** A modelling node (200) comprising at least one processing unit (210, 220) for providing a simulation model (SM) configured to simulate a fluid flow around a structure (S), the modelling node (200) being configured to execute the steps of:

obtaining structural data (Ds) in the form of a three-dimensional digital model describing a geometric outline of the structure (S);
obtaining fluid data ($D_F$) in the form of a digital description of a fluid flow (F) in three dimensions, which fluid flow (F) is to be applied on the structure (S) in the simulation model (SM);
generating a fluid tunnel (T) based on the fluid data ($D_F$), the fluid tunnel (T) constituting a volume in which the fluid movements (FF) around the structure (S) is to be simulated, which volume is outwardly delimited by a tunnel boundary;
generating a surface mesh (Ms) based on the structural data (Ds), the surface mesh (Ms) representing a connected surface enclosing the structure (S);
generating a volume mesh (Mv) of geometrically shaped space filling elements around the surface mesh (Ms), the mesh of geometrically shaped space filling elements extending between the surface mesh (Ms) and the tunnel boundary, the mesh of geometrically shaped space filling elements having an initial level of granularity; and
increasing, repeatedly, a granularity of the mesh of geometrically shaped space filling elements from the initial level of granularity to levels of higher granularity, the granularity being increased in response to a posteriori estimation of errors in a fluid load prediction via a refinement algorithm configured to adaptively construct local error indicators of which of said geometrically shaped space filling elements to refine to enhance a quality metric of the volume mesh (Mv), the granularity of the mesh being increased until a stopping criterion is fulfilled, and a resulting mesh of geometrically shaped space filling elements is obtained.

**8.** A computer-implemented solver method for illustrating estimated fluid movements (FF) around a structure (S) modelled by the simulation model (SM) generated by the method according to any one of the claims 1 to 4, the computer-implemented solver method comprising the steps of:

obtaining digital fluid data ($D_F$) describing an incoming fluid flow (F) in three dimensions;
deriving fluid movements (FF) around the structure (S) using computational fluid dynamics operations on at least one high-performance computing resource (451, 45i, 45n) to estimate a result ($r_1$, $r_i$, $r_n$) of the incoming fluid flow (F) being applied to the surface mesh (Ms) and the volume mesh (Mv) resulting from the simulation model (SM), the fluid movements (FF) being represented by evolving at least one fluid quantity over a set of time steps during an interval; and

post processing the derived fluid movements (FF) to generate presentation data ($D_P$) configured to be presented on a display (330), which presentation data ($D_P$) represent at least one graphic illustration of the fluid movements (FF) in at least one time step in said set of time steps.

9. The computer-implemented solver method according to claim 8, wherein the at least one graphic illustration comprises at least one of an image, a video sequence and one or more quantities of interest describing at least one of the at least one fluid quantity.

10. The computer-implemented solver method according to any one of claims 8 or 9, wherein the at least one fluid quantity represents at least one of velocity data and pressure data.

11. A system for illustrating estimated fluid movements (FF) around a structure (S), the system comprising:

an interface node (430) configured to obtain:

structural data (Ds) describing a geometric outline of the structure (S) in the form of a three-dimensional digital model, and

digital fluid data ($D_F$) describing an incoming fluid flow (F) in three dimensions, which incoming fluid flow (F) will cause the estimated fluid movements (FF) around a structure (S),

a modelling node (200) arranged to provide a simulation model (SM) based on the structural data (Ds) and the digital fluid data ($D_F$), the simulation model (SM) being configured to simulate a fluid flow around a structure (S); a set of networked computing resources (310) comprising a number of high-performance computing resources (451, 45i, 45n) configured to derive fluid movements (FF) around the structure (S) using computational fluid dynamics operations to estimate a result ($r_1$, $r_i$, $r_n$) of the incoming fluid flow (F) being applied to the surface mesh (Ms) and the volume mesh (Mv) resulting from the simulation model (SM), the fluid movements (FF) being represented by evolving at least one fluid quantity over a set of time steps during an interval; and a graphics processing node (320) configured to post process the derived fluid movements (FF) to generate presentation data ($D_P$) configured to be presented on a display (330), which presentation data ($D_P$) represent at least one graphic illustration of the fluid movements (FF) in at least one time step in said set of time steps.

12. The system according to claim 11, wherein the modelling node (200) comprises at least one processing unit (210, 220) configured to:

obtain the structural data (Ds) and the fluid data ($D_F$), and based thereon;

generate a fluid tunnel (T) constituting a volume in which the fluid movements (FF) around the structure (S) is to be simulated, which volume is outwardly delimited by a tunnel boundary;

generate a surface mesh (Ms) representing a connected surface enclosing the structure (S); and

generate a volume mesh (Mv) of geometrically shaped space filling elements around the surface mesh (Ms), the mesh of geometrically shaped space filling elements extending between the surface mesh (Ms) and the tunnel boundary.

13. The system according to claim 12, wherein the at least one processing unit (210, 220) is configured to generate the volume mesh (Mv) of geometrically shaped space filling elements by:

generating a mesh of geometrically shaped space filling elements having an initial level of granularity; and increasing, repeatedly, a granularity of the mesh of geometrically shaped space filling elements from the initial level of granularity to levels of higher granularity, the granularity being increased in response to a posteriori estimation of errors in a fluid load prediction via a refinement algorithm configured to adaptively construct local error indicators of which of said geometrically shaped space filling elements to refine to enhance a quality metric of the volume mesh (Mv), the granularity of the mesh being increased until a stopping criterion is fulfilled, and a resulting mesh of geometrically shaped space filling elements is obtained.

14. The system according to any one of claims 11 to 13, wherein the at least one fluid quantity represents at least one of velocity data and pressure data.

**Fig. 1**

**Fig. 2**

**Fig. 3**

**Fig. 4**

**Fig. 5**

**Fig. 6**

START

710 — Obtain structural data describing a geometric outline of a structure

720 — Obtain fluid data describing a fluid flow to be applied to the structure

730 — Generate a surface mesh

740 — Generate a fluid tunnel

750 — Generate a volume mesh of geometrically shaped space filling elements around the surface mesh to represent a simulation model, the volume mesh extending between the surface mesh and a boundary of the fluid tunnel

END

**Fig. 7**

START

810 — Obtain a simulation model comprising a volume mesh of geometrically shaped space filling elements around a surface mesh of a structure, which geometrically shaped space filling elements extend between the surface mesh and a boundary of a fluid tunnel

820 — Obtain fluid data describing an incoming fluid flow towards the structure

830 — Derive fluid movements around the structure using computational fluid flow dynamics operations

840 — Post process the derived fluid movements to generate presentation data

ENDS

**Fig. 8**

| | Europäisches Patentamt European Patent Office Office européen des brevets | **EUROPEAN SEARCH REPORT** | Application Number EP 20 17 8087 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDREW WISSINK ET AL: "Cartesian Adaptive Mesh Refinement for Rotorcraft Wake Resolution", 28TH AIAA APPLIED AERODYNAMICS CONFERENCE, 28 June 2010 (2010-06-28), pages 1-18, XP055745414, Reston, Virigina DOI: 10.2514/6.2010-4554 ISBN: 978-1-62410-141-0 * the whole document * * page 3, paragraph 4 * * page 3, paragraph 7 - page 4, paragraph 1 * * figures 3, 4 * * page 7, last paragraph; figure 6 * * figure 9 * | 1-14 | INV. G06F30/28 G06F30/23 G06F30/15 ADD. G06F111/10 G06F113/08 |
| X | MARIAN NEMEC ET AL: "Adjoint-Based Adaptive Mesh Refinement for Complex Geometries", PC-15: ATOMIZATION AND SPRAYS, 7 January 2008 (2008-01-07), pages 1-23, XP055745434, DOI: 10.2514/6.2008-725 ISBN: 978-1-62410-128-1 * the whole document * * page 3, paragraphs 2, 3 * * figure 15 * * page 13, paragraph 2 * | 1-14 | |
| X | GB 2 340 275 A (FORD GLOBAL TECH INC [US]) 16 February 2000 (2000-02-16) * the whole document * * page 4, paragraph 2 - page 5, paragraph 1 * * figures 1, 5 * -/-- | 1-14 | TECHNICAL FIELDS SEARCHED (IPC) G06F |

The present search report has been drawn up for all claims

| Place of search | Date of completion of the search | Examiner |
|---|---|---|
| Munich | 30 October 2020 | Wellisch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 20 17 8087

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/278052 A1 (BARRON RONALD [CA] ET AL) 1 November 2012 (2012-11-01) <br> * paragraph [0046] * <br> * paragraphs [0010], [0011] * <br> ----- | 1-14 | |

TECHNICAL FIELDS
SEARCHED      (IPC)

The present search report has been drawn up for all claims

| Place of search | Date of completion of the search | Examiner |
|---|---|---|
| Munich | 30 October 2020 | Wellisch, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 17 8087

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2020

| Patent document cited in search report | | Publication date | Patent family member(s) | | Publication date |
|---|---|---|---|---|---|
| GB 2340275 | A | 16-02-2000 | DE | 19919891 A1 | 09-03-2000 |
| | | | GB | 2340275 A | 16-02-2000 |
| | | | US | 6088521 A | 11-07-2000 |
| US 2012278052 | A1 | 01-11-2012 | NONE | | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8577648 B
- US 20100145668 A
- US 6512999 B